# FASCICULE DE BREVET EUROPEEN

(11) **EP 3 456 933 B1**
(45) Date de publication et mention de la délivrance du brevet: **25.03.2020**
(21) Numéro de dépôt: 18182919.3
(22) Date de dépôt: 11.07.2018
(51) Int. Cl.: B22F 5/10, B33Y 80/00, B33Y 10/00, F01D 25/20, F02C 7/06, F04D 29/06

(54) **GROUPE DE LUBRIFICATION POUR TURBOMACHINE, TURBOMACHINE ET PROCÉDÉ DE FABRICATION D'UNE GROUPE DE LUBRIFICATION**
SCHMIEREINHEIT FÜR EINE TURBOMASCHINE, TURBOMASCHINE UND HERSTELLUNGSVERFAHREN FÜR EINE SCHMIEREINHEIT
LUBRICATING UNIT FOR A TURBOMACHINE, TURBOMACHINE AND MANUFACTURING METHOD FOR A LUBRICATING UNIT

(30) Priorité: 15.09.2017 BE 201705656
(43) Date de publication de la demande: 20.03.2019
(73) Titulaire: Safran Aero Boosters SA, 4041 Herstal (BE)
(72) Inventeur: CHENOUX, Mathieu, 6700 Arlon (BE); FELLIN, Nicolas, 4570 Marchin (BE)
(74) Mandataire: Lecomte & Partners

(56) Documents cités:
- FR-A- 1 333 611
- US-A1- 2016 208 708

## Description

### Domaine technique

L'invention concerne un groupe de lubrification ainsi que son procédé de fabrication. L'invention a également trait à une turbomachine axiale, notamment un turboréacteur d'avion ou un turbopropulseur d'aéronef.

### Technique antérieure

Un turboréacteur d'avion comporte généralement un circuit de lubrification incluant un groupe de lubrification. Le groupe de lubrification sera équipé d'une pluralité de pompes logées dans un même corps qui est traversé par un arbre entraînant les rotors des différentes pompes.

Le document FR3017413 A1 divulgue un turboréacteur comportant un groupe de lubrification entraîné par une broche de la turbomachine. Le groupe de lubrification comporte une pompe avec un carter présentant une entrée, une sortie et un passage formé dans le carter. Le document FR 1 333 611 divulgue une pompe à huile pour turbine à gaz.

### Résumé de l'invention

### Problème technique

L'invention a pour objectif de résoudre au moins un des problèmes posés par l'art antérieur. Plus précisément, l'invention a pour objectif d'optimiser la masse d'un groupe de lubrification. L'invention a également pour objectif de proposer une solution optimisant les écoulements, résistante, économique, fiable, facile à produire, commode d'entretien, d'inspection aisée, et améliorant le rendement.

### Solution technique

L'invention a pour objet un groupe de lubrification de turbomachine, notamment de turboréacteur d'aéronef, le groupe de lubrification comprenant : au moins deux pompes, et un corps qui présente un passage communiquant avec chacune des pompes, remarquable en ce que la matière du corps présente un empilement de couches selon une direction d'empilement, les pompes étant logées dans ledit empilement de couches, et en ce que le passage présente une extrémité selon la direction d'empilement des couches, et un profil avec une première droite et une deuxième droite qui forment ladite extrémité et qui sont inclinées par rapport aux couches de l'empilement.

Selon des modes avantageux de l'invention, le groupe de lubrification peut comprendre une ou plusieurs des caractéristiques suivantes, prises isolément ou selon toutes les combinaisons techniques possibles :
- La première droite et la deuxième droite génèrent respectivement une première surface réglée et une deuxième surface réglée, notamment un premier plan et un deuxième plan, qui sont incliné(e)s par rapport au couches.
- Le profil forme un triangle ou un pentagone avec un allongement principal suivant la direction d'empilement, notamment agencé perpendiculairement aux couches.
- Le profil comporte en outre une troisième droite inclinée par rapport aux deux autres et inclinée par rapport aux couches, ladite troisième droite raccordant éventuellement la première droite à la deuxième droite.
- L'extrémité du profil comporte un rayon de raccordement reliant la première droite à la deuxième droite, le rayon de raccordement étant inférieur ou égal à 10mm ou à 4mm.
- Le passage s'étend sur la majorité du corps selon la direction d'empilement.
- La première droite est parallèle à la direction d'empilement, ou inclinée d'au plus: 15°, ou 10°, ou 5° par rapport à la direction d'empilement.
- La deuxième droite est inclinée d'au moins : 30° ou 45° par rapport aux couches.
- Le corps présente un logement principal recevant les au moins deux pompes, le logement présentant un axe principal suivant, et/ou parallèle, et/ou incliné au plus de 20° par rapport à, la direction d'empilement.
- La direction d'empilement est plus inclinée par rapport à la première droite et/ou par rapport à la deuxième droite que par rapport à l'axe principal.
- Chaque pompe comporte un rotor avec un axe de rotation suivant, et/ou parallèle, et/ou incliné au plus de 20° par rapport à la direction d'empilement des couches, les rotors étant éventuellement superposés selon la direction d'empilement.
- Le groupe de lubrification comporte un arbre d'entraînement des pompes, l'arbre d'entraînement traversant la majorité des couches.
- Les au moins deux pompes comprennent au moins trois pompes, ou au moins cinq pompes communiquant, notamment directement, avec le passage.
- Le groupe comporte au moins un puits auxiliaire ou au moins deux puits auxiliaires avec des axes auxiliaires agencés transversalement par rapport aux couches.
- Le groupe de lubrification comporte une canalisation dans laquelle est formé le passage, et présentant éventuellement un profil externe en triangle ou en pentagone.
- Le corps présente deux faces opposées, la canalisation s'étendant d'une face opposée à l'autre.
- La canalisation comporte un allongement principal formant une première courbure puis une deuxième courbure tournant dans un sens inverse à la première courbure.
- Les couches sont planes et/ou parallèles les unes aux autres.
- Le corps comprend un ajour séparant le fût central de la canalisation, au moins localement.
- Le profil forme la surface interne du passage.
- La première droite et la deuxième droite sont inclinées l'une par rapport à l'autre d'au moins : 20°, ou 30° ; et/ou sont inclinées différemment par rapport aux couches.
- Le corps forme un carter externe du groupe de lubrification.
- Le logement principal présente une forme de cylindre, l'axe principal étant l'axe de symétrie du cylindre.
- L'axe principal est parallèle et/ou est désaxé par rapport à l'axe de rotation ou les axes de rotation des aux moins deux pompes, les pompes présentant éventuellement un axe de rotation commun.
- L'axe principal est parallèle à l'axe auxiliaire ou à chaque axe auxiliaire.
- Le corps présente des fenêtres de sortie reliant chaque pompe au passage.
- Le corps est monobloc et/ou venu de matière, et/ou issu de fabrication additive par couches.
- Les axes auxiliaires sont parallèles.
- Le logement principal est formé dans le fût principal.
- Le profil s'étend sur au moins : 5%, ou 10%, ou 15%, ou 20%, ou la majorité de la longueur du passage.
- Le corps présente deux extrémités opposées, le passage reliant lesdites extrémités opposées. Les extrémités peuvent être opposées le long d'une des couches du corps, et/ou dans le plan d'une ou des couches.

L'invention a également pour objet une turbomachine, notamment un turboréacteur d'aéronef apte à fonctionner avec une accélération verticale négative, comprenant un circuit de lubrification avec un groupe de lubrification, remarquable en ce que groupe de lubrification est conforme à l'invention, préférentiellement la turbomachine comprend plusieurs paliers tournants chacun connecté de manière indépendante à l'une des pompes du groupe de lubrification.

L'invention a également pour objet un procédé de fabrication d'un groupe de lubrification de turbomachine, notamment de turboréacteur d'aéronef, le groupe de lubrification comprenant au moins deux pompes et un carter avec un corps logeant les au moins deux pompes et un passage ; remarquable en ce que le passage comporte un profil avec une première droite et une deuxième droite formant une extrémité du profil, le procédé comprend les étapes (a) conception du groupe de lubrification, et (b) réalisation par fabrication additive par couches empilées du corps, de manière à réaliser progressivement la première droite et/ou la deuxième droite, transversalement aux couches empilées, le groupe étant notamment conforme à l'invention.

Selon un mode avantageux de l'invention, l'étape (b) réalisation par fabrication additive par couches est une réalisation additive par couche de poudre, notamment d'aluminium ou de titane.

Selon un exemple non revendiqué, est divulgué un procédé de fabrication d'un groupe de lubrification de turbomachine, notamment d'un turboréacteur d'aéronef, le groupe de lubrification comprenant une ou plusieurs pompes et un corps commun à chaque pompe: remarquable en ce que le procédé comprend les étapes : (a) conception du groupe de lubrification ; et (b) réalisation par fabrication additive par couches du corps suivant une direction de fabrication, notamment une direction d'empilement des couches ; et en ce que le corps présente un passage connecté à chacune des pompes, ledit passage présentant une extrémité en pointe s'enfonçant dans l'empilement suivant l'épaisseur des couches, le groupe étant notamment conforme à l'invention.

De manière générale, les modes avantageux de chaque objet de l'invention sont également applicables aux autres objets de l'invention. Chaque objet de l'invention est combinable aux autres objets, et les objets de l'invention sont également combinables aux modes de réalisation de la description, qui en plus sont combinables entre eux, selon toutes les combinaisons techniques possibles, à moins que le contraire ne soit explicitement mentionné.

### Avantages apportés

L'invention permet d'augmenter la hauteur du passage le long des pompes, tout en supprimant les espaces morts pour le fluide, et en optimisant la compacité de la pompe vis-à-vis de son environnement. La quantité de matière de la pompe est également réduite, ce qui en limite la masse comme le coût.

La canalisation correspondant au passage devient autoportante, et sa forme répond mieux aux critères vibratoires du groupe de lubrification, dont les pics de pression générés par les pompes elles-mêmes. L'inertie de l'huile circulant dans le passage est prise en compte. La forme triangulaire reste une forme simple, qui optimise encore l'espace disponible pour l'écoulement et la robustesse. L'agencement des pointes les plus aigües du profil à des emplacements opposés selon la direction d'empilement s'inscrit dans cette démarche. L'orientation du sommet central vers le centre du corps facilite son accrochage au fût. L'agencement des faces droites et/ou des droites permet d'épouser le cylindre central.

### Brève description des dessins

La figure 1 représente une turbomachine axiale selon l'invention.
La figure 2 esquisse un corps de groupe de lubrification selon l'invention.
La figure 3 illustre une surface de passage de groupe de lubrification selon un premier mode de réalisation de l'invention.
La figure 4 montre un profil du passage selon le premier mode de réalisation de l'invention.
La figure 5 montre un profil du passage selon un deuxième mode de réalisation de l'invention.
La figure 6 est un diagramme d'un procédé de fabrication d'un groupe de lubrification selon l'invention.

### Description des modes de réalisation

Dans la description qui va suivre, les termes « entrée » et « sortie » sont en relation avec le sens d'écoulement de l'huile lors du fonctionnement normal du groupe de lubrification.

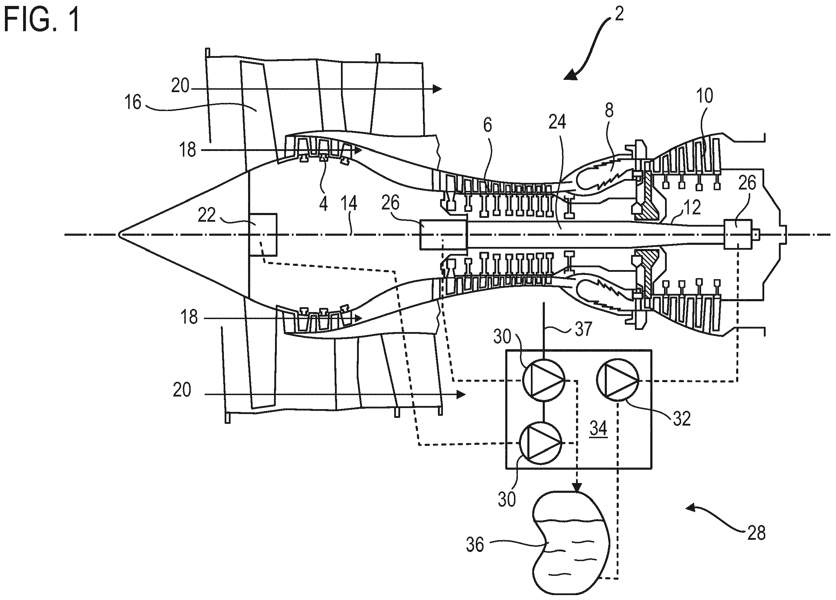

La figure 1 représente de manière simplifiée une turbomachine axiale. Il s'agit dans ce cas précis d'un turboréacteur double-flux. Le turboréacteur 2 comprend un compresseur basse-pression 4, un compresseur haute-pression 6, une chambre de combustion 8 et une ou plusieurs turbines 10. En fonctionnement, la puissance mécanique de la turbine 10 transmise via l'arbre central jusqu'au rotor 12 met en mouvement les deux compresseurs 4 et 6. La rotation du rotor autour de son axe de rotation 14 permet ainsi de générer un débit d'air et de comprimer progressivement ce dernier jusqu'à l'entrée de la chambre de combustion 8.

Un ventilateur d'entrée communément désigné fan ou soufflante 16 est couplé au rotor 12 et génère un flux primaire 18, et un flux secondaire 20. Le flux secondaire 20 peut être accéléré de sorte à générer une réaction de poussée nécessaire au vol d'un avion.

Des moyens de démultiplication 22, tel un réducteur épicycloïdal, peuvent réduire la vitesse de rotation de la soufflante 16 et/ou du compresseur basse-pression 4 par rapport à la turbine associée et/ou à l'arbre de transmission 24 correspondant. Ce dernier est avantageusement monté tournant grâce à des paliers 26 logés dans des enceintes de lubrification.

La turbomachine 2 peut comporter un circuit de lubrification 28 alimentant en huile les paliers 26 des arbres 24 comme les moyens de démultiplication 22. En plus de lubrifier les pièces en mouvement, l'huile peut les refroidir, et réchauffer des zones à dégivrer.

Le circuit 28 peut présenter une pompe de récupération 30 et une pompe d'alimentation 32 pour chaque organe ou chaque enceinte de lubrification. Les pompes de récupération 30 comme les pompes d'alimentation 32 peuvent avantageusement être réunies dans un groupe de lubrification 34. Eventuellement, le groupe de lubrification 34 pompe l'huile vers et depuis un réservoir 36 grâce à un arbre d'entraînement 37.

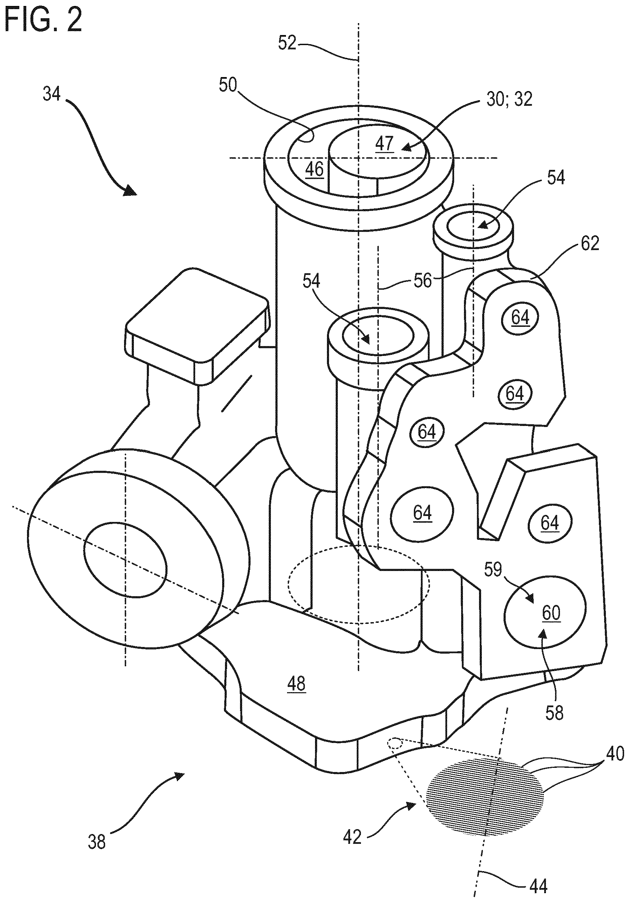

La figure 2 représente le carter externe d'un groupe de lubrification 34, par exemple tel que celui de la figure 1.

Le carter du groupe de lubrification 34 présente un corps 38, notamment un corps principal. Le corps 38 peut être monobloc. Il peut être venu de matière. Sa matière peut présenter un empilement de couches 40, notamment des couches parallèles. Le corps 38 peut être produit en alliage d'aluminium comme en alliage de titane, ces matériaux pouvant former les grains et/ou les cristaux. Dans un agrandissement 42, éventuellement lors d'une observation micrographique, les couches 40 peuvent être identifiées. Par exemple, chaque couche 40 peut être formée d'une matière granuleuse. Les couches 40 peuvent être formées par des grains de matière, éventuellement par des cristaux, notamment métalliques.

Les couches 40 peuvent être parallèles. Elles peuvent être empilées selon une direction d'empilement 44. Les couches 40 peuvent être d'épaisseur(s) inférieure(s) ou égale(s) à : 1,00 mm, ou 0,10 mm, et/ou supérieure(s) ou égale(s) à : 10µm, 100µm.

Le corps 38 peut présenter logement principal 46 formé par un fût central, ou tube central. Le logement principal 46 forme un espace dans lequel les rotors 47 de pompes (30 ; 32) sont disposés. Ce logement principal 46 peut s'étendre sur la majorité du corps 38 suivant la direction d'empilement 44. Il peut s'étendre depuis une embase de fixation 48 destinée à être reliée à un support tel une boîte d'engrenage d'accessoires, également connu sous l'acronyme « AGB ».

Le logement principal 46 peut présenter une surface interne 50. Celle-ci peut être cylindrique, et montrer un axe de symétrie 52. Cet axe de symétrie 52 peut être propre au logement 46, et être parallèle à l'axe d'empilement 44 ; ou du moins être incliné, au plus, de 15° par rapport à l'axe d'empilement 44.

Le corps 38 peut également présenter un ou plusieurs puits auxiliaires 54 recevant des crépines (non représentées), éventuellement multiétages. Ces crépines peuvent correspondre à celle décrite dans le document EP3127592A1. Les crépines peuvent être placées en entrée des pompes (30 ; 32), et donc en entrée du logement principal 46, afin d'intercepter des débris en circulation dans l'huile. Des axes auxiliaires 56 peuvent correspondre aux allongements principaux des puits auxiliaires 54, et peuvent être parallèles à l'axe de symétrie 52.

En sortie des pompes (30 ; 32), le corps 38 peut présenter un passage 58 connecté hydrauliquement aux pompes, notamment à chacune des pompes (30 ; 32) mentionnées en figure 1. Le passage 58 peut être formé par une canalisation 59, éventuellement séparée du fût, par exemple localement. La sortie 60 du passage 58 est visible. Cette sortie forme un orifice dans une plaque 62 dans laquelle sont formés des ajours 64 correspondant aux entrées des pompes (30 ; 32). Les entrées peuvent traverser les crépines.

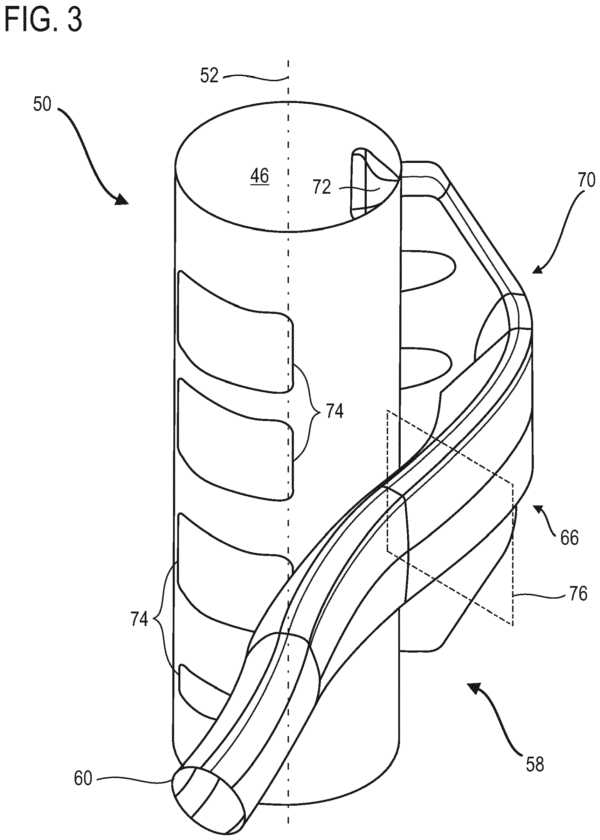

La figure 3 esquisse la surface interne 66 du passage 58 tel que celui de la figure 2. Y est également représentée la surface interne 50 du logement principal 46, notamment tel que celui de la figure 2. La surface interne 66 du passage 58 peut connecter la surface interne 50 du logement principal 46 à la sortie 60.

Le passage 58 peut notamment comprendre un tronçon collecteur 70 relié indépendamment à chacune des pompes. Des fenêtres de sortie 72 peuvent relier le tronçon collecteur 70 au logement 46, tandis que de fenêtres d'entrée 74 sont à l'opposé par rapport à l'axe de symétrie 52, soit diamétralement opposés. Le tronçon 70 peut s'étendre sur la majorité du logement 46.

Le passage 58 peut présenter une inversion de courbure dans le plan des couches. Il peut former un « S », et éventuellement un point d'interrogation. Il peut tourner, éventuellement d'un demi-tour, dans un sens au niveau du logement 46, par exemple pour le contourner en respectant une certaine compacité ; et tourner dans l'autre sens au niveau de la sortie 60. La sortie 60 peut être orientée dans le même sens que les fenêtres d'entrée 74, et/ou que les fenêtres de sortie 72.

Le passage 58 peut présenter, au moins localement, un profil interne observé dans un plan de coupe 76. Sa surface interne 66 peut être générée par le profil interne, au moins localement. Cette surface interne 66 peut présenter un quart de tour entre le collecteur 70 et le profil.

Le plan de coupe peut être perpendiculaire à la ligne moyenne du passage 58, qui passe notamment par le centre de gravité de ses sections. Le profil interne peut générer la surface interne 66 du passage 58.

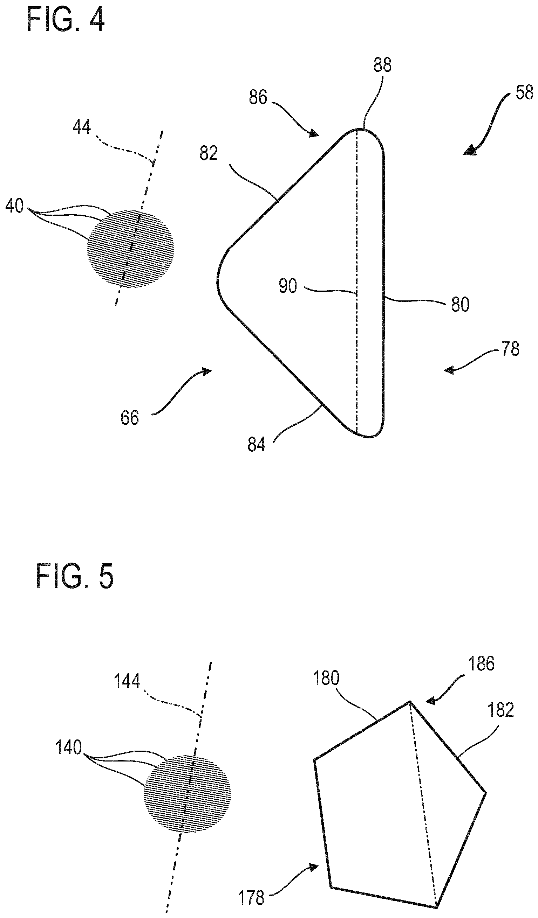

La figure 4 esquisse un profil interne 78 du passage 58, notamment du passage tel que présenté en relation avec les figures 2 et 3.

La surface interne 66 du passage 58 peut comprendre un profil interne 78 triangulaire. Ce profil 78 peut comprendre une première droite 80, une deuxième droite 82 et une troisième droite 84. Ces droites (80-84) sont inclinées les unes par rapport aux autres. Les droites peuvent (80-84) générer des surfaces droites, ou des surfaces réglées. Elles peuvent comprendre des portions planes.

Au moins une ou chaque extrémité 86, selon la direction d'empilement 44 des couches 40, est formée par au moins deux des droites (80-84). Elles peuvent présenter des inclinaisons différentes par rapport à la direction d'empilement 44. La première droite 80 peut suivre la direction 44, et éventuellement y être parallèle. La deuxième droite 82 peut être davantage inclinée par rapport à la direction d'empilement, cette inclinaison peut être comprise entre 20° et 60° inclus. Un rayon de raccordement 88 relie la première et la deuxième droite 82. Son rayon de courbure peut être compris entre 2mm et 10mm, il est éventuellement égal à 4mm.

L'allongement principal 90 du profil 78 peut suivre la direction d'empilement 44. Alternativement, ils peuvent être inclinés l'un par rapport à l'autre d'un angle inférieur ou égal à 15°.

La figure 5 représente un profil interne du passage selon un deuxième mode de réalisation de l'invention. Cette figure 5 reprend la numérotation des figures précédentes pour les éléments identiques ou similaires, la numération étant toutefois incrémentée de 100.

Dans ce mode de réalisation, le profil interne 178 forme un pentagone. Une première droite 180 et une deuxième droite 182 forment une extrémité 186 selon la direction d'empilement 144 des couches 140. Optionnellement, un rayon de raccordement connecte les droites 180 et 182.

Le profil interne selon le deuxième mode de réalisation peut être appliqué à l'enseignement de figures 1 à 3.

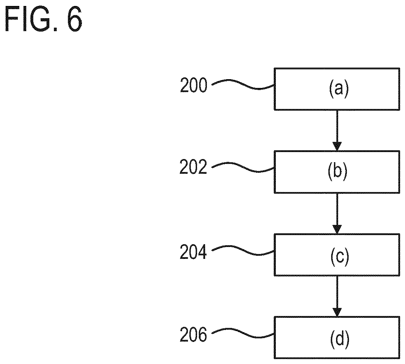

La figure 6 est un diagramme d'un procédé de fabrication d'un groupe de lubrification de turbomachine. Le groupe de lubrification peut correspondre à celui ou ceux présentés en relation avec les figures 1 à 5.

Le procédé peut comprendre les étapes suivantes :
(a) conception 200 du carter du guide de lubrification, en définissant les formes de son corps, dont celles de ses passages, puis
(b) réalisation par fabrication additive 202 du corps, par exemple à base de poudre ; par exemple de titane ou d'aluminium.

Optionnellement le procédé peut comprendre les étapes suivantes :
(c) usinage 204 du corps issu de l'étape (b) réalisation 202 ; et/ou
(d) montage d'inserts 206.

Les inserts peuvent comprendre une chemise, une ou plusieurs crépines filtrantes, des couronnes dentées de pompes gerotor, ou des rotors de pompes à palettes, des aimants piégeant des débris, des capteurs électroniques.

## Revendications

1. Groupe de lubrification (34) de turbomachine (2), notamment de turboréacteur d'aéronef, le groupe de lubrification (34) comprenant :
- au moins deux pompes (30 ; 32), et
- un corps (38) qui présente un passage (58) communiquant avec chacune des pompes (30 ; 32),
**caractérisé en ce que**
la matière du corps (38) présente un empilement de couches (40; 140) selon une direction d'empilement (44; 144), les pompes (30; 32) étant logées dans ledit empilement de couches (40 ; 140),
et **en ce que**
le passage (58) présente une extrémité (86; 186) selon la direction d'empilement (44 ; 144) des couches (40 ; 140), et un profil (78 ; 178) avec une première droite (80 ; 180) et une deuxième droite (82 ; 182) qui forment ladite extrémité (86 ; 186) et qui sont inclinées par rapport aux couches (40 ; 140) de l'empilement.

2. Groupe de lubrification (34) selon la revendication 1, **caractérisé en ce que** la première droite (80 ; 180) et la deuxième droite (82 ; 182) génèrent respectivement une première surface réglée et une deuxième surface réglée, notamment un premier plan et un deuxième plan, qui sont incliné(e)s par rapport au couches (40 ; 140).

3. Groupe de lubrification (34) selon l'une des revendications 1 à 2, **caractérisé en ce que** le profil (78 ; 178) forme un triangle ou un pentagone avec un allongement principal (90) suivant la direction d'empilement (44 ; 144), notamment agencé perpendiculairement aux couches (40 ; 140).

4. Groupe de lubrification (34) selon l'une des revendications 1 à 3, **caractérisé en ce que** le profil (78 ; 178) comporte en outre une troisième droite (84) inclinée par rapport aux deux autres et inclinée par rapport aux couches (40 ; 140), ladite troisième droite (84) raccordant éventuellement la première droite (80 ; 180) à la deuxième droite (82 ; 182).

5. Groupe de lubrification (34) selon l'une des revendications 1 à 4, **caractérisé en ce que** l'extrémité (86 ; 186) du profil (78 ; 178) comporte un rayon de raccordement (88) reliant la première droite (80 ; 180) à la deuxième droite (82 ; 182), le rayon de raccordement (88) étant inférieur ou égal à : 10mm ou 4mm.

6. Groupe de lubrification (34) selon l'une des revendications 1 à 5, **caractérisé en ce que** la première droite (80; 180) est parallèle à la direction d'empilement (44 ; 144), ou inclinée d'au plus 15° par rapport à la direction d'empilement.

7. Groupe de lubrification (34) selon l'une des revendications 1 à 6, **caractérisé en ce que** la deuxième droite (82 ; 182) est inclinée d'au moins : 30° par rapport aux couches (40 ; 140).

8. Groupe de lubrification (34) selon l'une des revendications 1 à 7, **caractérisé en ce que** le corps (38) présente un logement principal (46) recevant les au moins deux pompes (30 ; 32), le logement (46) présentant un axe principal (52) suivant la direction d'empilement (44 ; 144).

9. Groupe de lubrification (34) selon la revendication 8, **caractérisé en ce que** la direction d'empilement (44; 144) est plus inclinée par rapport à la première droite (80 ; 180) et/ou par rapport à la deuxième droite (82 ; 182) que par rapport à l'axe principal (52).

10. Groupe de lubrification (34) selon l'une des revendications 1 à 9, **caractérisé en ce que** chaque pompe (30 ; 32) comporte un rotor (47) avec un axe de rotation suivant la direction d'empilement (44 ; 144), les rotors (47) étant éventuellement superposés selon la direction d'empilement.

11. Groupe de lubrification (34) selon l'une des revendications 1 à 10, **caractérisé en ce qu'**il comporte au moins un puits auxiliaire (54) ou au moins deux puits auxiliaires avec des axes auxiliaires (56) agencés transversalement par rapport aux couches (40 ; 140).

12. Groupe de lubrification (34) selon l'une des revendications 1 à 11, **caractérisé en ce qu'**il comporte une canalisation (59) dans laquelle est formé le passage (58), et présentant éventuellement un profil externe en triangle ou en pentagone.

13. Turbomachine (2), notamment un turboréacteur d'aéronef apte à fonctionner avec une accélération verticale négative, comprenant un circuit de lubrification (28) avec un groupe de lubrification (34), **caractérisé en ce que** le groupe de lubrification (34) est conforme à l'une des revendications 1 à 12, préférentiellement la turbomachine (2) comprend plusieurs paliers tournants (26) chacun connecté hydrauliquement de manière indépendante à l'une des pompes (30 ; 32) du groupe de lubrification (34).

14. Procédé de fabrication d'un groupe de lubrification (34) de turbomachine (2), notamment de turboréacteur d'aéronef, le groupe de lubrification (34) comprenant au moins deux pompes (30 ; 32) et un carter avec un corps (38) logeant les au moins deux pompes (30 ; 32) et un passage (58); **caractérisé en ce que** le passage (58) comporte un profil (78 ; 178) avec une première droite (80; 180) et une deuxième droite (82 ; 182) formant une extrémité (86 ; 186) du profil (78 ; 178),
le procédé comprend les étapes :
(a) conception (200) du groupe de lubrification (34), et
(b) réalisation par fabrication additive (202) par couches empilées du corps (38), de manière à réaliser progressivement la première droite (80; 180) et/ou la deuxième droite (82; 182), transversalement aux couches (40; 140) empilées, le groupe de lubrification étant notamment conforme à l'une de revendications 1 à 12.

15. Procédé selon la revendication 14, **caractérisé en ce que** l'étape (b) réalisation par fabrication additive (202) par couches est une réalisation additive par couche de poudre, notamment d'aluminium ou de titane.

## Patentansprüche

1. Schmiereinheit (34) für eine Turbomaschine (2), insbesondere für ein Flugzeug-Turbostrahltriebwerk, wobei die Schmiereinheit (34) Folgendes umfasst:
- mindestens zwei Pumpen (30; 32) und
- ein Gehäuse (38), der einen Durchgang (58) aufweist, der mit jeder der Pumpen (30; 32) in Verbindung steht,
**dadurch gekennzeichnet, dass**
das Material des Gehäuses (38) einen Stapel von Schichten (40; 140) in einer Stapelrichtung (44; 144) aufweist, wobei die Pumpen (30; 32) in dem genannten Stapel von Schichten (40; 140) untergebracht sind,
und dass
der Durchgang (58) ein Ende (86; 186) in Stapelrichtung (44; 144) der Lagen (40; 140) und ein Profil (78; 178) mit einer ersten Geraden (80; 180) und einer zweiten Geraden (82; 182) aufweist, die das genannte Ende (86; 186) bilden und die in Bezug auf die Lagen (40; 140) des Stapels geneigt sind.

2. Schmiereinheit (34) nach Anspruch 1, **dadurch gekennzeichnet, dass** die erste Gerade (80; 180) und die zweite Gerade (82; 182) jeweils eine erste und eine zweite Regelfläche, insbesondere eine erste und eine zweite Ebene, erzeugen, die in Bezug auf die Schichten (40; 140) geneigt sind.

3. Schmiereinheit (34) nach einem der Ansprüche 1 und 2, **dadurch gekennzeichnet, dass** das Innenprofil (78; 178) ein Dreieck oder ein Fünfeck mit einer Hauptausdehnung (90) in Stapelrichtung (44; 144) bildet, das insbesondere senkrecht zu den Schichten (40; 140) angeordnet ist.

4. Schmiereinheit (34) nach einem der Ansprüche 1 bis 3, **dadurch gekennzeichnet, dass** das Innenprofil (78; 178) außerdem eine dritte Gerade (84) umfasst, die in Bezug auf die beiden anderen Geraden und in Bezug auf die Schichten (40; 140) geneigt ist, wobei die dritte Gerade (84) möglicherweise die erste Gerade (80; 180) mit der zweiten Geraden (82; 182) verbindet.

5. Schmiereinheit (34) nach einem der Ansprüche 1 bis 4, **dadurch gekennzeichnet, dass** das Ende (86; 186) des Innenprofils (78; 178) einen Rundungsradius (88) aufweist, der die erste Gerade (80; 180) mit der zweiten Geraden (82; 182) verbindet, wobei der Rundungsradius (88) kleiner oder gleich 10 mm oder 4 mm ist.

6. Schmiereinheit (34) nach einem der Ansprüche 1 bis 5, **dadurch gekennzeichnet, dass** die erste Gerade (80; 180) parallel zur Stapelrichtung (44; 144) oder um höchstens 15° gegenüber der Stapelrichtung geneigt ist.

7. Schmiereinheit (34) nach einem der Ansprüche 1 bis 6, **dadurch gekennzeichnet, dass** die zweite Gerade (82; 182) um mindestens 30° gegenüber den Schichten (40; 140) geneigt ist.

8. Schmiereinheit (34) nach einem der Ansprüche 1 bis 7, **dadurch gekennzeichnet, dass** das Gehäuse (38) ein Hauptgehäuse (46) aufweist, das die mindestens zwei Pumpen (30; 32) aufnimmt, wobei das Hauptgehäuse (46) eine Hauptachse (52) in Stapelrichtung (44; 144) aufweist.

9. Schmiereinheit (34) nach Anspruch 8, **dadurch gekennzeichnet, dass** die Stapelrichtung (44; 144) in Bezug auf die erste Gerade (80; 180) und/oder in Bezug auf die zweite Gerade (82; 182) stärker geneigt ist als in Bezug auf die Hauptachse (52).

10. Schmiereinheit (34) nach einem der Ansprüche 1 bis 9, **dadurch gekennzeichnet, dass** jede Pumpe (30; 32) einen Rotor (47) mit einer Drehachse in Stapelrichtung (44; 144) aufweist, wobei die Rotoren (47) in Stapelrichtung übereinander angeordnet sein können.

11. Schmiereinheit (34) nach einem der Ansprüche 1 bis 10, **dadurch gekennzeichnet, dass** sie mindestens einen Hilfsschacht (54) oder mindestens zwei Hilfsschächte mit quer zu den Schichten (40; 140) angeordneten Hilfsachsen (56) aufweist.

12. Schmiereinheit (34) nach einem der Ansprüche 1 bis 11, **dadurch gekennzeichnet, dass** sie einen Kanal (59) umfasst, in dem der Durchgang (58) ausgebildet ist und der gegebenenfalls ein drei- oder fünfeckiges Außenprofil aufweist.

13. Turbomaschine (2), insbesondere ein Flugzeug-Turbostrahltriebwerk, das mit negativer Vertikalbeschleunigung arbeiten kann, mit einem Schmierkreislauf (28) mit einer Schmiereinheit (34), **dadurch gekennzeichnet, dass** die Schmiereinheit (34) einem der Ansprüche 1 bis 12 entspricht, und vorzugsweise die Turbomaschine (2) mehrere Drehlager (26) aufweist, die jeweils unabhängig voneinander hydraulisch mit einer der Pumpen (30; 32) der Schmiereinheit (34) verbunden sind.

14. Verfahren zur Herstellung einer Schmiereinheit (34) für eine Turbomaschine (2), insbesondere für ein Flugzeug-Turbostrahltriebwerk, wobei die Schmiereinheit (34) mindestens zwei Pumpen (30; 32) und eine Ummantelung mit einem Gehäuse (38) umfasst, das die mindestens zwei Pumpen (30; 32) aufnimmt sowie einen Durchgang (58),
**dadurch gekennzeichnet, dass** der Durchgang (58) ein Innenprofil (78; 178) mit einer ersten Geraden (80; 180) und einer zweiten Geraden (82; 182) umfasst, die ein Ende (86; 186) des Innenprofils (78; 178) bilden,
wobei die Methode die folgenden Schritte umfasst:
(a) die Auslegung (200) der Schmiereinheit (34) und
(b) die Verwendung von additiver Fertigung (202), um das Gehäuse (38) in gestapelten Lagen herzustellen, so dass nach und nach die erste Gerade (80; 180) und/oder die zweite Gerade (82; 182) quer zu den gestapelten Lagen (40; 140) entstehen, wobei die Schmiereinheit insbesondere einem der Ansprüche 1 bis 12 entspricht.

15. Verfahren nach Anspruch 14, **dadurch gekennzeichnet, dass** in Schritt (b) ein additives Fertigungsverfahren unter Verwendung von Pulverschichten, insbesondere Aluminium- oder Titanpulver, angewendet wird.

## Claims

1. Lubrication unit (34) for a turbomachine (2), notably an aircraft turbojet engine, the lubrication unit (34) comprising:
- at least two pumps (30; 32), and
- a body (38) which exhibits a passage (58) communicating with each of the pumps (30; 32),
**characterized in that**
the material of the body (38) exhibits a stack of layers (40; 140) in a direction of stacking (44; 144), the pumps (30; 32) being housed in the said stack of layers (40; 140),
and **in that**
the passage (58) exhibits an end (86; 186) in the direction of stacking (44; 144) of the layers (40; 140), and a profile (78; 178) with a first straight line (80; 180) and a second straight line (82; 182) which form the said end (86; 186) and which are inclined with respect to the layers (40; 140) of the stack.

2. Lubrication unit (34) according to Claim 1, **characterized in that** the first straight line (80; 180) and the second straight line (82; 182) respectively generate a first ruled surface and a second ruled surface, notably a first plane and a second plane, which are inclined with respect to the layers (40; 140).

3. Lubrication unit (34) according to one of Claims 1 and 2, **characterized in that** the internal profile (78; 178) forms a triangle or a pentagon with a principal elongation (90) in the direction of stacking (44; 144), notably arranged perpendicular to the layers (40; 140).

4. Lubrication unit (34) according to one of Claims 1 to 3, **characterized in that** the internal profile (78; 178) further comprises a third straight line (84) which is inclined with respect to the other two straight lines and inclined with respect to the layers (40; 140), the said third straight line (84) possibly connecting the first straight line (80; 180) to the second straight line (82; 182).

5. Lubrication unit (34) according to one of Claims 1 to 4, **characterized in that** the end (86; 186) of the internal profile (78; 178) comprises a fillet radius (88) connecting the first straight line (80; 180) to the second straight line (82; 182), the fillet radius (88) being less than or equal to: 10 mm or 4 mm.

6. Lubrication unit (34) according to one of Claims 1 to 5, **characterized in that** the first straight line (80; 180) is parallel to the direction of stacking (44; 144), or inclined by at most 15° with respect to the direction of stacking.

7. Lubrication unit (34) according to one of Claims 1 to 6, **characterized in that** the second straight line (82; 182) is inclined by at least 30° with respect to the layers (40; 140).

8. Lubrication unit (34) according to one of Claims 1 to 7, **characterized in that** the body (38) exhibits a main housing (46) accommodating the at least two pumps (30; 32), the housing (46) exhibiting a main axis (52) in the direction of stacking (44; 144).

9. Lubrication unit (34) according to Claim 8, **characterized in that** the direction of stacking (44; 144) is more inclined with respect to the first straight line (80; 180) and/or with respect to the second straight line (82; 182) than with respect to the main axis (52).

10. Lubrication unit (34) according to one of Claims 1 to 9, **characterized in that** each pump (30; 32) comprises a rotor (47) with an axis of rotation in the direction of stacking (44; 144), the rotors (47) possibly being superimposed in the direction of stacking.

11. Lubrication unit (34) according to one of Claims 1 to 10, **characterized in that** it comprises at least one auxiliary well (54) or at least two auxiliary wells with auxiliary axes (56) arranged transversely with respect to the layers (40; 140).

12. Lubrication unit (34) according to one of Claims 1 to 11, **characterized in that** it comprises a duct (59) in which the passage (58) is formed and which possibly has a triangular or pentagonal external profile.

13. Turbomachine (2), notably an aircraft turbojet engine able to operate with negative vertical acceleration, comprising a lubrication circuit (28) with a lubrication unit (34), **characterized in that** the lubrication unit (34) is in accordance with one of Claims 1 to 12, preferably the turbomachine (2) comprises several rotary bearings (26) each independently hydraulically connected to one of the pumps (30; 32) of the lubrication unit (34).

14. Method for manufacturing a lubrication unit (34) for a turbomachine (2), notably an aircraft turbojet engine, the lubrication unit (34) comprising at least two pumps (30; 32) and a casing with a body (38) housing the at least two pumps (30; 32) and a passage (58);
**characterized in that** the passage (58) comprises an internal profile (78; 178) with a first straight line (80; 180) and a second straight line (82; 182) forming one end (86; 186) of the internal profile (78; 178),
the method comprising the following steps:
(a) designing (200) the lubrication unit (34), and
(b) using additive manufacturing (202) to produce the body (38) in stacked layers so as to progressively create the first straight line (80; 180) and/or the second straight line (82; 182) transversely to the stacked layers (40; 140), the lubrication unit being notably in accordance with one of Claims 1 to 12.

15. Method according to Claim 14, **characterized in that** step (b) additive manufacturing process uses layers of powder, notably aluminium powder or titanium powder.
